# EUROPÄISCHE PATENTSCHRIFT

(11) **EP 1 883 712 B1**
(45) Veröffentlichungstag und Bekanntmachung des Hinweises auf die Patenterteilung: **02.11.2011**
(21) Anmeldenummer: 06753590.6
(22) Anmeldetag: 13.05.2006
(51) Int. Cl.: C22C 9/10, B32B 15/01, F16C 33/14, F16C 33/12, C22F 1/08

(54) **GLEITLAGERVERBUNDWERKSTOFF, VERWENDUNG UND HERSTELLUNGSVERFAHREN**
PLAIN BEARING COMPOSITE MATERIAL, USE THEREOF AND PRODUCTION METHODS THEREFOR
MATERIAU COMPOSITE POUR PALIERS LISSES, UTILISATION ET PROCEDES DE FABRICATION

(30) Priorität: 13.05.2005 DE 102005023308
(43) Veröffentlichungstag der Anmeldung: 06.02.2008
(73) Patentinhaber: Federal-Mogul Wiesbaden GmbH, 65201 Wiesbaden (DE)
(72) Erfinder: ANDLER, Gerd, 65307 Bad Schwalbach (DE)
(74) Vertreter: Mehler Achler
(86) Internationale Anmeldenummer: PCT/EP2006/004505
(87) Internationale Veröffentlichungsnummer: WO 2006/120016

(56) Entgegenhaltungen:
- DE-A1- 1 558 474
- US-A1- 2003 099 853

## Beschreibung

Die Erfindung betrifft einen Gleitlagerverbundwerkstoff gemäß Anspruch 1. Ferner bezieht sich die Erfindung auf eine Verwendung und auf Herstellungsverfahren.

Aus der DE 44 15 629 C1 ist die Verwendung einer Kupfer-Nickel-Siliziumlegierung für die Herstellung von verschleißfesten Gegenständen mit Notlaufeigenschaften, wie beispielsweise Gießkolben von Druckgießmaschinen bekannt. Die in der DE 44 15 629 C1 beschriebene Legierung besteht aus 1 - 4% Nickel, 0,1 -1,5% Silizium und Rest Kupfer und wird als Massivwerkstoff eingesetzt.

Die US 2,137,282 beschreibt eine Legierung aus 0,1 - 30% Nickel, 0,05 - 3% Silizium und Rest Kupfer. Diese Legierung zeichnet sich nach entsprechender Wärmebehandlung durch große Härten und gute elektrische Leitfähigkeiten aus.

Die US 1,658,186 beschreibt eine Kupfer-Nickel-Siliziumleglerung, wobei ausführlich die als Hartteilchen wirkenden Silizide diskutiert werden. Verschiedene Wärmebehandlungsverfahren zur Einstellung der Härte werden angegeben.

Eine weitere Kupfer-Nickel-Siliziumlegierung findet sich In US 2,241,815, wobei der Nickelanteil bei 0,5 - 5% und der Siliziumanteil bei 0,1 - 2% liegt.

Auch in der DE 15 58 474 A1 ist eine Kupfer-Nickel-Siliziumlegierung mit 0,8 - 10% Nickel und 0,2 - 2% Silizium offenbart, der zum Erzielen einer hohen Formänderungsfähigkeit bei möglichst geringer vorgeschalteter Kaltverformung gezielt 0,01 - 0,5% Eisen und 0,05 - 0,5% Chrom zulegiert werden.

Die US 2,185,958 beschreibt Legierungen aus 1% Nickel, 3,5% Silizium und Rest Kupfer sowie aus 1,5% Silizium und 1 % Nickel sowie Rest Kupfer.

Aus der DE 36 42 825 C1 ist ein Gleitlagerwerkstoff bestehend aus 4 bis 10% Nickel, 1 - 2% Aluminium, 1 - 3% Zinn und Rest Kupfer sowie übliche Verunreinigungen bekannt, der eine hohe Festigkeit und große Lebensdauer aufweisen soll. Aus diesem Gleitlagerwerkstoff werden Vollmaterialbuchsen hergestellt.

Die GB 2384007 beschreibt einen Gleitlagerverbundwerkstoff mit einem Stahlrücken, auf dem eine Sinterschicht aus einer Kupferlegierung aufgebracht ist, die eine Härte von max. 130 HV aufweist. Die Kupferlegierung weist 1 - 11 Gew.% Zinn, bis 0,2 Gew.% Phosphor, max. 10 Gew.% Nickel oder Silber, max. 25 Gew.% Blei und Wismut auf.

Gleitlagerelemente aus Vollmaterial haben den Nachteil, dass sie zur Gewährleistung des Presssitzes im Gehäuse eine sehr große Festigkeit und damit Härte aufweisen müssen. Bei Anwendungsfällen, wo die Anpassungsfähigkeit des Lagermetalls bei z. B. lokalem Verschließ der Gleitschicht gefordert ist, neigen solche Werkstoffe verstärkt zum Fressen oder führen zu Schädigungen der Welle.

Ein weiterer Nachteil besteht darin, dass aufgrund der unterschiedlichen Wärmeausdehnungskoeffizienten sich in einem Stahlgehäuse das Gleitlagerelement stärker ausdehnt und somit das Spiel nachteilig verkleinert wird.

Aufgabe der Erfindung ist es, einen Gleitlagerverbundwerkstoff zu schaffen, dessen mechanische und tribologische Eigenschaften an die gewünschten Anforderungen angepasst werden können, wobei gleichzeitig auch die erforderliche Steifigkeit für den Presssitz gewährleistet wird. Außerdem sollen Geleitlagerelemente aus diesem Gleitlagerverbundwerkstoff sich für den Einbau in Stahlgehäusen besonders eignen. Es ist auch Aufgabe, eine Verwendung und Herstellungsverfahren anzugeben.

Diese Aufgabe wird mit einem Gleitlagerverbundwerkstoff gemäß Anspruch 1 gelöst.

Es hat sich gezeigt, dass Kupferlegierungen mit Nickel-Silizium hinsichtlich ihrer mechanischen und tribologischen Eigenschaften in einem weiten Bereich eingestellt werden können, so dass eine Anpassung an die geforderten Eigenschaften möglich ist.

Der Stahlrücken gewährleistet aufgrund seiner Steifigkeit den erforderlichen Presssitz, so dass die Gefügestruktur des Lagermaterials unabhängig von Festigkeitsanforderungen eingestellt werden kann. Die beanspruchten Kupferlegierungen können somit bezüglich ihrer Gefügestruktur beispielsweise so gestaltet werden, dass sie hinsichtlich Festigkeit und Härte sowie der tribologischen Eigenschaften, wie z. B. Fressverhalten, in einem vergleichbaren Bereich wie die klassischen Blei-Bronzelager liegen.

Insgesamt wird der Einsatzbereich des Gleitlagerverbundwerkstoffes wesentlich erweitert.

Auch bieten die Verbundwerkstoffe mit Stahlrücken Vorteile aufgrund ihres thermischen Ausdehnungskoeffizienten in Anwendungsfällen mit Stahlgehäusen.

Die Einstellung der tribologischen Eigenschaften des Lagermetalls erfolgt vorzugsweise durch eine thermomechanischen Behandlung, insbesondere durch Walzen und Glühen.

Eine solche thermomechanische Behandlung des Verbundwerkstoffes kann derart gestaltet werden, dass die für das Fertigteil notwendigen Eigenschaften des Stahls nicht beeinträchtigt werden.

Das erfindungsgemäße Herstellungsverfahren sieht gemäß einer ersten Alternative folgende Verfahrensschritte vor:
Herstellen von Bandmaterial aus einer Kupfer-Nickel-Silizium-Legierung und Walzplattieren des Bandmaterials auf einer Trägerschicht aus Stahl zur Herstellung eines Verbundes. Hierbei erfolgt eine Umformung des Lagermetalls und/oder Stahls von 50 - 70 %.

Die anschließende thermomechanische Behandlung sieht folgende Schritte vor:
erstes Glühen des Verbundes bei 550°C bis 700°C für 2 bis 5 Stunden, mindestens ein erstes Walzen des Verbundes, wobei ein Umformgrad von 20 bis 30 % durchgeführt wird,
mindestens ein zweites Glühen bei 500°C - 600°C für mehr >1 h,
gegebenenfalls ein zweites Walzen des Verbundes, wobei ein Umformgrad von max. 30 % durchgeführt wird mit einem anschließenden dritten Glühen bei Temperaturen >500°C über mindestens 1 h.

Gemäß weiterer Alternativen wird die Kupferlegierung auf die Trägerschicht aufgetragen und gesintert oder aufgegossen.

Mittels des ersten bzw. des zweiten Walzschrittes in Kombination mit der sich daran anschließenden Glühung wird die Streckgrenze des Lagermetalls eingestellt, wobei vorzugsweise die Streckgrenze des Lagermetalls bei 150 bis 250 MPa liegt.

Wenn nach dem zweiten Glühen das Endmaß erreicht worden ist, wird die thermo-mechanische Behandlung beendet. Die Streckgrenze wird in diesem Fall durch das erste Walzen und das zweite Glühen eingestellt.

Wenn nach dem zweiten Glühen das Endmaß noch nicht erreicht ist, schließt sich das zweite Walzen und eine dritter Glühschritt an, wodurch die Streckgrenze auf den angegebenen Wert eingestellt wird.

Das Gefüge nach der thermo-mechanischen Behandlung zeichnet sich durch feine, gleichmäßig isotrop verteilte intermetallische Ausscheidungen auf NiSi-Basis innerhalb der Kupfermatrix aus.

Die genannte Streckgrenze des Lagermetalls liegt deutlich unter der von Stahl, was deswegen möglich ist, weil hier die Stahlträgerschicht für den erforderlichen Presssitz sorgt. Der Vorteil der erfindungsgemäßen Verbundwerkstoffe besteht darin, dass die Streckgrenze des Lagermetalls soweit abgesenkt werden kann, bis die gewünschten tribologischen Eigenschaften, insbesondere die Anpassungsfähigkeit der Lagermetallschicht, erreicht werden, d. h., dass es z. B. zu keinem oder nur geringem Verschleiß des Gegenläufers kommt.

Vom Verbund werden zur Herstellung von Gleitlagerelementen nach dem Längsteilen Platinen abgetrennt und die Platinen durch bekannte Umformschritte zu Gleitlagerelementen umgeformt. Der abschließende Prozess stellt vorzugsweise das Gleitlagerbearbeiten und das Aufbringen der Gleitschicht dar.

Die Gleitschicht wird mittels galvanischer Abscheidung, PVD-Verfahren, insbesondere Sputtern, oder anderer in den Patentansprüchen genannten Verfahren, gegebenenfalls nach Aufbringen einer Zwischenschicht, aufgetragen. Gegebenenfalls wird auf die Gleitschicht noch eine Einlaufschicht aufgebracht.

Durch die Gleitschicht werden die tribologischen Eigenschaften des Verbundwerkstoffs weiter verbessert.

In der Kupfer-Nickel-Siliziumlegierung liegt der Nickelanteil bei 0,5 - 5 Gew.%, vorzugsweise bei 1,0 bis 3,0 Gew.%, insbesondere bei 1,5 bis 2,2 Gew.%, und der Siliziumanteil bei 0,2 - 2,5 Gew.%, vorzugsweise bei 0,4 bis 1,2 Gew.% oder bei 0,5 bis 1,5 Gew.%.

Die Kupfer-Nickel-Silizium-Legierung kann 0,05 - 2,0 Gew.% Mangan, vorzugsweise 0,15 - 1,5 Gew.% aufweisen.

Es hat sich gezeigt, dass bei einem Gewichtsverhältnis von Nickel zu Silizium zwischen 2,5 und 5 (Nickel : Silizium = 2,5 bis 5) die tribologischen Eigenschaften verbessert werden können, insbesondere ein Fressen des Lagerwerkstoffes deutlich verringert werden kann. Bei diesen Gewichtsverhältnissen werden die für die guten tribologischen Eigenschaften verantwortlichen Nickel-Silizium-Verbindungen begünstigt und in ausreichendem Maße gebildet.

Die Kupferlegierungen können weitere Mikrolegierungselemente aufweisen. Vorzugsweise weist die Trägerschicht 0,05 - 0,4 Gew.%, vorzugsweise 0,075 bis 0,25 Gew.%, mindestens eines Mikrolegierungselementes auf. Als Mikrolegierungselemente kommen beispielsweise Chrom, Titan, Zirkon, Zink und Magnesium einzeln oder in Kombination in Frage.

Vorzugsweise besteht zwischen der Lagermetallschicht und der Trägerschicht gegebenenfalls über eine Zwischenschicht eine Walzplattierverbindung. Für die Zwischenschicht können Kupfer oder eine Kupferlegierung, wie z.B. eine Kupfer-Zink-Legierung oder eine Kupfer-Zinn-Legierung eingesetzt werden.

Die Lagermetallschicht kann auch eine Sinterschicht oder eine Gießschicht sein, wobei Sintertemperaturen zwischen 600°C und 800°C über 10 - 30 min bzw. Begießtemperaturen von 1000°C bis 1250°C eingesetzt werden. In den Sinterprozess ist ein erstes Glühen integriert.

Es ist weiterhin von Vorteil, wenn die Gleitschicht aus einer Galvanikschicht besteht. Galvanikschichten sind multifunktionale Werkstoffe, die sich unter anderem durch gute Einbettfähigkeit für Fremdpartikel, durch Einlaufeigenschaften bzw. Anpassung an den Gleitpartner, als Korrosionsschutz und durch gute Notlaufeigenschaften im Fall von Ölmangel auszeichnen. Insbesondere bei der Verwendung von niedrigviskosen Ölen sind Galvanikschichten von Vorteil, weil hierbei häufiger Mischreibungszustände auftreten können, bei denen die genannten Eigenschaften zum Tragen kommen.

Die Galvanikschicht besteht vorzugsweise aus Blei-Zinn-Kupfer-, Zinn-Kupfer-, Wismut- Kupferlegierung oder aus reinem Wismut.

In den Blei-Zinn-Kupfer-Legierungen liegt der Anteil von Zinn vorzugsweise bei 4 - 20 Gew.% und der von Kupfer bei 1 -10 Gew.%. In den Wismut-Kupferlegierungen liegen die bevorzugten Anteile von Kupfer bei 1 - 20 Gew.%.

Die Gleitschicht kann auch mittels eines thermischen Beschichtungsverfahrens aufgebracht sein. Als thermische Beschichtungsverfahren kommen Plasmaspritzen, Hochgeschwindigkeitsflammspritzen und Kaltgasspritzen in Frage.

Ein weiteres bevorzugtes Verfahren ist das PVD-Verfahren und hier insbesondere das Sputtern. Sputter-Schichten bestehen vorzugsweise aus Aluminium-Zinnlegierungen, Aluminium-Zinn-Kupferlegierungen, Aluminium-Zinn-Nickel-Mangan-Legierungen, Aluminium-Zinn-Silizium-Legierungen oder Aluminium-Zinn-Silizium-Kupferlegierungen.

Vorzugsweise beträgt in diesen Legierungen der Zinnanteil 8 - 40 Gew.%, der Kupferanteil 0,5 - 4,0 Gew.%, der Siliziumanteil 0,02 - 5,0 Gew.%, der Nickelanteil 0,02 - 2,0 Gew.% und der Mangananteil 0,02 - 2,5 Gew.%.

Gemäß einer weiteren Ausführungsform kann die Gleitschicht aus einer Kunststoffschicht bestehen. Kunststoffschichten werden vorzugsweise mittels eines Lackier- oder Druckverfahrens, wie z. B. Sieb- oder Kissendruck, durch Tauchen oder Spritzen aufgetragen.

Die zu beschichtende Oberfläche muss hierzu geeignet vorbereitet werden durch Entfetten, chemisches oder physikalisches Aktivieren und/oder mechanisches Anrauhen, beispielsweise durch Sandstrahlen oder Schleifen.

Die Matrix der Kunststoffschichten besteht vorzugsweise aus hochtemperaturbeständigen Harzen wie PAI. Außerdem können in die Matrix Zusätze wie MoS₂, Bornitrid, Graphit oder PTFE eingelagert sein. Die Anteile der Zusätze einzeln oder in Kombination liegen vorzugsweise zwischen 5 und 50 Vol.%.

Um die Bindung zu verbessern, ist vorzugsweise zwischen der Lagermetallschicht und der Gleitschicht mindestens eine Zwischenschicht angeordnet. Diese Zwischenschicht kann ebenfalls eine Galvanikschicht sein, auch dann, wenn die Gleitschicht mittels eines Sputter-Verfahrens aufgebracht wird.

Die Zwischenschicht, die galvanisch aufgebracht wird, kann Nickel oder Silber aufweisen oder aus diesen Elementen bestehen. Es ist auch möglich zwei Zwischenschichten aus Nickel und Zinn-Nickel aufzubringen.

Anstelle von galvanisch aufgebrachten Zwischenschichten können auch Sputter-Zwischenschichten vorgesehen sein. In diesem Fall sind Nickellegierungsschichten, z. B. aus NiCu30, reine Nickelschichten, Nickel-Chromschichten, die vorzugsweise 15 - 25 % Chrom enthalten, Zinkschichten, Zinklegierungsschichten, Chrom- und Kupferschichten, Nickel-Chrom-Legierungsschichten, Nickel-Kupfer-Legierungsschichten, Kupfer-Legierungsschichten oder Chrom-NickelLegierungsschichten bevorzugt.

Die Dicke der Lagermetallschicht liegt vorzugsweise bei 0,1 - 0,8 mm, vorzugsweise bei 0,1 - 0,5 mm, insbesondere bei 0,15 - 0,35 mm.

Für die Dicke der Zwischenschicht sind 1 -12 µm, vorzugsweise 0,5 - 7,0 µm, insbesondere 1,0 - 4,0 µm, bevorzugt und für die Dicke der Gleitschicht 4 - 30 µm, vorzugsweise 8 - 20 µm, insbesondere 10 - 16 µm.

Die Dicke der Einlaufschicht liegt bei 0,2 - 12 µm, vorzugsweise bei 0,2 bis 6 µm, insbesondere bei 0,2 bis 3 µm.

Bevorzugte Verwendungen des Gleitlagerverbundwerkstoffes sind solche für Gleitlagerschalen.

Beispielhafte Kupferlegierungen sind:

**Tabelle 1 (Angaben in Gew.%)**

| Beispiel | 1 | 2 | 3 | 4 | 5 |
|---|---|---|---|---|---|
| Ni | 1,9 | 1,5 | 0,8 | 3,8 | 2,8 |
| Si | 0,6 | 0,5 | 0,25 | 1,2 | 0,8 |
| Mn | 0,15 | 0,05 | 0,05 | 0,1 | 0,05 |
| Pb | <0,1 | <0,1 | <0,1 | <0,1 | <0,1 |
| Cr | | 0,15 | | | 0,15 |
| Ti | | | | 0,15 | |
| Zr | | | 0,2 | | 0,15 |
| Cu | Rest | Rest | Rest | Rest | Rest |

Ein beispielhaftes Verfahren sieht folgende Verfahrensschritte vor:
- Stranggießen einer Kupferlegierung, insbesondere Doppelstranggießen, mit einer Breite von 300 mm und einer Dicke von 10 mm zur Herstellung von Bandmaterial
- Beidseitiges Fräsen und anschließendes Aufwickeln des Bandmaterials
- Walz- und Glühoperationen bis an das Walzplattiermaß.

Das Bandmaterial wird mechanisch vorbehandelt, z. B. durch Bürsten, und mittels Walzplattieren auf dem Stahlband aufgebracht. Das Stahlband hat die Breite 300 mm und eine Dicke von 4,5 mm. Das Walzplattieren mit der Kupferlegierung führt zu einem Umformgrad von 50 - 70 % entspricht.

Es folgt dann ein erster Glühschritt in einem Haubenofen bei 550°C über 2 Stunden. Im Anschluss daran wird ein erstes Walzen in einem Walzschritt durchgeführt, wobei eine Dickenreduzierung des Verbundes um 28% erfolgt, was dem Endmaß entspricht.

Anschließend wird der Verbund bei 550°C über 2 h geglüht. Danach erfolgt ein Längsteilen mit Abmessungen von 95 mm Breite x 1,56 mm Dicke.

Die Streckgrenze des Lagermetalls liegt in diesem Beispiel bei etwa 150-170 MPa.

Gemäß einer weiteren Verfahrensvariante wird die Kupferlegierung als Pulver auf das Stahlband aufgestreut und durch mindestens einen Sintervorgang bei 680°C über 10 - 20 min in Schutzgasatmosphäre aufgesintert.

Gemäß einer weiteren Verfahrensaltemative wird die Kupferlegierung mit einer Temperatur von 1000°C bis 1250°C auf das Stahlband aufgegossen, das vorzugsweise auf über 1000°C vorgewärmt ist. Anschließend erfolgt eine Abkühlung auf unter 100°C innerhalb von 1 bis 5 min, insbesondere in 2 bis 4 min.

Die anschließenden Walz- und Glühschritte entsprechen der Walzplattieraltemative.

Beispiele für Galvanikgleitschichten sind in der Tabelle 2 zusammengestellt.

**Tabelle 2 (Angaben in Gew.%)**

| Beispiel | 1 | 2 | 3 | 4 | 5 |
|---|---|---|---|---|---|
| Blei | 88 | 78 | | | |
| Zinn | 10 | 14 | 94 | | |
| Wismut | | | | 100 | 95 |
| Kupfer | 2 | 8 | 6 | | 5 |

Eine bevorzugte galvanische Gleitschicht weist eine Zinnmatrix auf, in die Zinn-Kupfer Partikel eingelagert sind, die aus 39 - 55 Gew.% Kupfer und Rest Zinn bestehen. Der Partikeldurchmesser liegt vorzugsweise bei 0,5 µm bis 3 µm. Diese galvanische Schicht wird vorzugsweise auf zwei Zwischenschichten aufgebracht, wobei die erste Zwischenschicht aus Ni und die darüber liegende zweite Zwischenschicht aus Nickel und Zinn besteht. Der Ni-Anteil der zweiten Zwischenschicht liegt bei 30 - 40 Gew.% Ni. Die erste Zwischenschicht hat eine Dicke von 1 bis 4 µm und die zweite Zwischenschicht von 2 bis 7 µm.

Beispiele für Sputter-Schichten sind in der Tabelle 3 zusammengefasst.

**Tabelle 3 (Angaben in Gew.%)**

| Beispiel | 1 | 2 | 3 | 4 | 5 |
|---|---|---|---|---|---|
| Al | Rest | Rest | Rest | Rest | Rest |
| Sn | 22 | 35 | 25 | 10 | 20 |
| Cu | 0,7 | 1,2 | 0,7 | 0,5 | 0,5 |
| Si | | | 2,5 | | 1,5 |
| Mn | | | | 1,5 | |
| Ni | | | | 0,7 | 0,7 |

Beispiele für Kunststoffgleitschichten sind in der Tabelle 4 zusammengefasst.

**Tabelle 4 (Angaben in Vol.%)**

| Beispiel | 1 | 2 | 3 | 4 | 5 |
|---|---|---|---|---|---|
| PAI | 70 | 80 | 70 | 75 | 65 |
| MoS2 | 30 | | | | 20 |
| BN | | 20 | | | |
| Graphit | | | 30 | | |
| PTFE | | | | 25 | 15 |

Alle genannten Gleitschichten können mit den Lagermetallschichten aus den Kupferlegierungen kombiniert werden.

Als Einlaufschichten auf diesen Schichtkombinationen können reine Zinn- oder Indium-Schichten, sowie alle genannten Galvanik- und Kunststoffschichten eingesetzt werden, wobei die Einlaufschicht vorzugsweise weicher als die eingesetzte Gleitschicht zu wählen ist.

## Patentansprüche

1. Gleitlagerverbundwerkstoff mit einer Trägerschicht aus Stahl, einer Lagermetallschicht aus einer Kupferlegierung aufweisend 0,5 - 5 Gew.% Nickel, 0,2 - 2,5 Gew.% Silizium, ≤0,1 Gew.% Blei, wahlweise 0,05 - 2 Gew.% Mangan, wahlweise 0,05 - 0,4 Gew.% mindestens eines Mikrolegierungselements und Rest Kupfer und mit einer auf der Lagermetallschicht aufgebrachten Gleitschicht.

2. Gleitlagerverbundwerkstoff nach Anspruch 1, **dadurch gekennzeichnet, dass** die Kupferlegierung 0,05 - 2 Gew.% Mangan aufweist.

3. Gleitlagerverbundwerkstoff nach Anspruch 1 oder 2, **dadurch gekennzeichnet, dass** das Gewichtsverhältnis von Nickel zu Silizium zwischen 2,5 und 5 liegt.

4. Gleitlagerverbundwerkstoff nach einem der Ansprüche 1 bis 3, d**adurch gekennzeichnet,** dass die Lagermetallschicht 0,05 - 0,4 Gew.% mindestens eines Mikrolegierungselements aufweist.

5. Gleitlagerverbundwerkstoff nach Anspruch 4, **dadurch gekennzeichnet, dass** die Mikrolegierungselemente Chrom, Titan, Zirkon, Zink und/oder Magnesium sind.

6. Gleitlagerverbundwerkstoff nach einem der Ansprüche 1 bis 5, **dadurch gekennzeichnet, dass** zwischen der Lagermetallschicht und der Trägerschicht gegebenenfalls über eine Zwischenschicht eine Walzplattierverbindung besteht.

7. Gleitlagerverbundwerkstoff nach einem der Ansprüche 1 bis 5, **dadurch gekennzeichnet, dass** die Lagermetallschicht eine Sinterschicht ist.

8. Gleitlagerverbundwerkstoff nach einem der Ansprüche 1 bis 5, **dadurch gekennzeichnet, dass** die Lagermetallschicht eine Gießschicht ist.

9. Gleitlagerverbundwerkstoff nach einem der Ansprüche 1 bis 8, **dadurch gekennzeichnet, dass** die Gleitschicht aus einer Galvanikschicht besteht.

10. Gleitlagerverbundwerkstoff nach Anspruch 9, **dadurch gekennzeichnet, dass** die Galvanikschicht aus Blei-Zinn-Kupfer-Legierung, Zinn-Kupfer-Legierung, Wismut-Kupfer-Legierung oder aus Wismut besteht.

11. Gleitlagerverbundwerkstoff nach Anspruch 10, **dadurch gekennzeichnet, dass** in den Blei-Zinn-Kupfer-Legierungen der Anteil von Zinn 4 - 20 Gew.% und der Anteil von Kupfer 1 - 10 Gew.% beträgt.

12. Gleitlagerverbundwerkstoff nach Anspruch 10, **dadurch gekennzeichnet, dass** in den Wismut-Kupfer-Legierungen der Kupfer Anteil 1 - 20 Gew.% und in den Zinn-Kupfer-Legierungen der Kupfer-Anteil 2 - 20 Gew.% beträgt.

13. Gleitlagerverbundwerkstoff nach einem der Ansprüche 1 bis 8, **dadurch gekennzeichnet, dass** die Gleitschicht aus einer mittels eines thermischen Beschichtungsverfahrens aufgebrachten Schicht besteht.

14. Gleitlagerverbundwerkstoff nach einem der Ansprüche 1 bis 8, **dadurch gekennzeichnet, dass** die Gleitschicht aus einer Kunststoffschicht besteht.

15. Gleitlagerverbundwerkstoff nach Anspruch 14, **dadurch gekennzeichnet, dass** die Matrix der Kunststoffgleitschicht aus hochtemperaturbeständigem Harz, wie PAI besteht.

16. Gleitlagerverbundwerkstoff nach Anspruch 14 oder 15, **dadurch gekennzeichnet, dass** die Kunststoffgleitschicht als Füllstoffe MoS₂, Bornitrid, PTFE und/oder Graphit aufweist.

17. Gleitlagerverbundwerkstoff nach Anspruch 16, **dadurch gekennzeichnet, dass** die Füllstoffe einzeln oder in Kombination bei 5 - 50 Vol.% liegen.

18. Gleitlagerverbundwerkstoff nach einem der Ansprüche 1 bis 17, **dadurch gekennzeichnet, dass** zwischen der Lagermetallschicht und der Gleitschicht mindestens eine Zwischenschicht angeordnet ist.

19. Gleitlagerverbundwerkstoff nach Anspruch 18, **dadurch gekennzeichnet, dass** die Zwischenschicht eine Galvanikschicht ist.

20. Gleitlagerverbundwerkstoff nach Anspruch 18, **dadurch gekennzeichnet, dass** die Zwischenschicht aus Nickel oder Silber aufweist.

21. Gleitiagerverbundwerkstoff nach Anspruch 19, **dadurch gekennzeichnet, dass** zwei Zwischenschichten aus Nickel und Zinn-Nickel vorgesehen sind.

22. Gleitlagerverbundwerkstoff nach Anspruch 18, **dadurch gekennzeichnet, dass** die Zwischenschicht eine Sputter-Schicht ist.

23. Gleitlagerverbundwerkstoff nach einem der Ansprüche 18 bis 22, **dadurch gekennzeichnet, dass** die Zwischenschicht aus einer Nickellegierung, einer Nickel-Chrom-Legierung, Nickel-Kupfer-Legierung, Zinklegierung, Zink, Chrom, Kupfer, Kupfer-Legierung, Nickel, Chrom-Nickel-Legierung oder Nickel-Chrom besteht.

24. Gleitlagerverbundwerkstoff nach einem der Ansprüche 1 bis 8 in Verbindung mit einem der Ansprüche 18 bis 23, **dadurch gekennzeichnet, dass** die Gleitschicht aus einer mittels PVD-Verfahren aufgebrachten Schicht besteht.

25. Gleitlagerverbundwerkstoff nach Anspruch 24, **dadurch gekennzeichnet, dass** die Gleitschicht aus einer Sputter-Schicht besteht.

26. Gleitlagerverbundwerkstoff nach Anspruch 25, **dadurch gekennzeichnet, dass** die Sputter-Schicht aus einer Aluminium-Zinn-Legierung, Aluminium-Zinn-Silizium-Legierung, Aluminium-Zinn-Kupfer-Legierung, einer Aluminium-Zinn-Silizium-Kupfer Legierung oder einer Aluminium-Zinn-Nickel-Mangan-Legierung besteht.

27. Gleitlagerverbundwerkstoff nach Anspruch 26, **dadurch gekennzeichnet, dass** in den Legierungen der Zinnanteil 8 - 40 Gew.%, der Kupferanteil 0,5 - 4,0 Gew.%, der Siliziumanteil 0,02 - 5,0 Gew.%, der Nickelanteil 0,02 - 2,0 Gew.% und der Mangananteil 0,02 - 2,5 Gew.% beträgt.

28. Gleitlagerverbundwerkstoff nach Anspruch 25, **dadurch gekennzeichnet, dass** die Zwischenschicht aus einer Galvanikschicht und die Gleitschicht aus einer Sputter-Schicht besteht.

29. Gleitlagerverbundwerkstoff nach einem der Ansprüche 1 bis 28, **dadurch gekennzeichnet, dass** auf der Gleitschicht eine Einlaufschicht vorgesehen ist.

30. Gleitlagerverbundwerkstoff nach Anspruch 29, **dadurch gekennzeichnet, dass** die Einlaufschicht als Zinn-, Blei-, Kupfer- oder Indium- oder als Kunststoffschicht ausgeführt ist.

31. Gleitlagerverbundwerkstoff nach einem der Ansprüche 1 bis 30, **dadurch gekennzeichnet, dass** die Dicke der Lagermetallschicht 0,1 - 0,8 mm beträgt.

32. Gleitlagerverbundwerkstoff einem der Ansprüche 1 bis 31, **dadurch gekennzeichnet, dass** die Dicke der Zwischenschicht 1 - 12 µm beträgt.

33. Gleitlagerverbundwerkstoff nach einem der Ansprüche 1 bis 32, **dadurch gekennzeichnet, dass** die Dicke der Gleitschicht 4 - 30 µm beträgt.

34. Gleitlagerverbundwerkstoff nach einem der Ansprüche 29 bis 33, **dadurch gekennzeichnet, dass** die Dicke der Einlaufschicht 0,2 bis 12 µm beträgt.

35. Verwendung eines Gleitlagerverbundwerkstoffes nach Anspruch 1 für Gleitlagerschalen.

36. Verfahren zur Herstellung von Gleitlagerverbundmaterial insbesondere für Gleitlagerelemente, wie Gleitlagerschalen, mit folgenden Verfahrensschritten:
- Herstellen von Bandmaterial aus einer Kupferlegierung gemäß Anspruch 1, und Walzplattieren des Bandmaterials gegebenenfalls unter Verwendung einer Zwischenschicht auf eine Trägerschicht aus Stahl zur Herstellung eines Verbundes,
- thermo-mechanische Behandlung mit folgenden Schritten:
- mindestens ein erstes Glühen des Verbundes bei 550°C - 700°C für 2 bis 5 Stunden
- mindestens ein erstes Walzen des Verbundes, wobei ein Umformgrad von 20 - 30 % durchgeführt wird,
- mindestens ein zweites Glühen bei 500°C - 600°C für mehr als 1 h.

37. Verfahren zur Herstellung von Gleitlagerverbundmaterial insbesondere für Gleitlagerelemente, wie Gleitlagerschalen, mit folgenden Verfahrensschritten:
- Aufbringen einer Kupferlegierung gemäß Anspruch 1 auf eine Trägerschicht aus Stahl zur Herstellung eines Verbundes,
- Sintern des Verbundes, wobei ein erstes Glühen in den Sinterprozess integriert ist,
- thermo-mechanische Behandlung mit folgenden Schritten:
- mindestens ein erstes Walzen des Verbundes, wobei ein Umformgrad von 20 - 30 % durchgeführt wird,
- mindestens ein zweites Glühen bei 500°C - 600°C für mehr als 1 h.

38. Verfahren zur Herstellung von Gleitlagerverbundmaterial insbesondere für Gleitlagerelemente, wie Gleitlagerschalen, mit folgenden Verfahrensschritten:
- Aufgießen einer Kupferlegierung gemäß Anspruch 1 auf eine Trägerschicht aus Stahl zur Herstellung eines Verbundes,
- thermo-mechanische Behandlung mit folgenden Schritten:
- mindestens ein erstes Glühen des Verbundes bei 550°C - 700°C für 2 bis 5 Stunden
- mindestens ein erstes Walzen des Verbundes, wobei ein Umformgrad von 20 - 30 % durchgeführt wird,
- mindestens ein zweites Glühen bei 500°C - 600°C für mehr als 1 h.

39. Verfahren nach einem der Ansprüche 36 bis 38, **dadurch gekennzeichnet, dass** nach dem zweiten Glühen ein zweites Walzen mit einem Umformgrad von max. 30 % mit einem anschließenden dritten Glühen bei Temperaturen >500°C über mindestens 1 h angeschlossen wird.

40. Verfahren zur Herstellung von Gleitlagerelementen, insbesondere von Gleitlagerschalen, **dadurch gekennzeichnet,**
**dass** ein Verbund nach einem der Ansprüche 36 bis 39 hergestellt wird,
**dass** vom Verbund Platinen abgetrennt werden,
**dass** diese Platinen zu Gleitlagerelementen umgeformt werden und
**dass** eine Gleitschicht aufgebracht wird.

41. Verfahren nach Anspruch 40, **dadurch gekennzeichnet, dass** vor dem Aufbringen der Gleitschicht mindestens eine Zwischenschicht aufgebracht wird.

42. Verfahren nach einem der Ansprüche 40 oder 41, **dadurch gekennzeichnet, dass** auf die Gleitschicht eine Einlaufschicht aufgebracht wird.

## Claims

1. Slide bearing composite material having a carrier layer of steel, a bearing-metal layer composed of a copper alloy having 0.5 - 5% by weight of nickel, 0.2 - 2.5% by weight of silicon, ≤0.1% by weight of lead, optionally 0.05 - 2% by weight of manganese, optionally 0.05 - 0.4% by weight of at least one microalloying element and remainder copper and having a sliding layer applied to the bearing-metal layer.

2. Slide bearing composite material according to claim 1, **characterised in that** the copper alloy has 0.05 - 2% by weight of manganese.

3. Slide bearing composite material according to claim 1 or 2, **characterised in that** the ratio by weight of nickel to silicon is from 2.5 to 5.

4. Slide bearing composite material according to any one of claims 1 to 3, **characterised in that** the bearing-metal layer has 0.05 - 0.4% by weight of at least one microalloying element.

5. Slide bearing composite material according to claim 4, **characterised in that** the microalloying elements are chromium, titanium, zirconium, zinc and/or magnesium.

6. Slide bearing composite material according to any one of claims 1 to 5, **characterised in that** a roll-bonded connection exists between the bearing-metal layer and the carrier layer, optionally by way of an intermediate layer.

7. Slide bearing composite material according to any one of claims 1 to 5, **characterised in that** the bearing-metal layer is a sintered layer.

8. Slide bearing composite material according to any one of claims 1 to 5, **characterised in that** the bearing-metal layer is a cast layer.

9. Slide bearing composite material according to any one of claims 1 to 8, **characterised in that** the sliding layer comprises an electroplated layer.

10. Slide bearing composite material according to claim 9, **characterised in that** the electroplated layer is composed of lead-tin-copper alloy, tin-copper alloy, bismuth-copper alloy or of bismuth.

11. Slide bearing composite material according to claim 10, **characterised in that**, in the lead-tin-copper alloys, the proportion of tin is 4 - 20% by weight and the proportion of copper is 1 - 10% by weight.

12. Slide bearing composite material according to claim 10, **characterised in that**, in the bismuth-copper alloys, the proportion of copper is 1 - 20% by weight and, in the tin-copper alloys, the proportion of copper is 2 - 20% by weight.

13. Slide bearing composite material according to any one of claims 1 to 8, **characterised in that** the sliding layer comprises a layer applied by means of a thermal coating process.

14. Slide bearing composite material according to any one of claims 1 to 8, **characterised in that** the sliding layer comprises a plastics layer.

15. Slide bearing composite material according to claim 14, **characterised in that** the matrix of the plastics sliding layer is composed of high-temperature-resistant resin, such as PAI.

16. Slide bearing composite material according to claim 14 or 15, **characterised in that** the plastics sliding layer has MoS₂, boron nitride, PTFE and/or graphite as fillers.

17. Slide bearing composite material according to claim 16, **characterised in that** the fillers, individually or in combination, are at 5 - 50% by volume.

18. Slide bearing composite material according to any one of claims 1 to 17, **characterised in that** at least one intermediate layer is arranged between the bearing-metal layer and the sliding layer.

19. Slide bearing composite material according to claim 18, **characterised in that** the intermediate layer is an electroplated layer.

20. Slide bearing composite material according to claim 18, **characterised in that** the intermediate layer has nickel or silver.

21. Slide bearing composite material according to claim 19, **characterised in that** two intermediate layers of nickel and tin-nickel are provided.

22. Slide bearing composite material according to claim 18, **characterised in that** the intermediate layer is a sputtered layer.

23. Slide bearing composite material according to any one of claims 18 to 22, **characterised in that** the intermediate layer is composed of a nickel alloy, a nickel-chromium alloy, nickel-copper alloy, zinc alloy, zinc, chromium, copper, copper alloy, nickel, chromium-nickel alloy or nickel-chromium.

24. Slide bearing composite material according to any one of claims 1 to 8 in conjunction with any one of claims 18 to 23, **characterised in that** the sliding layer comprises a layer applied by means of PVD processes.

25. Slide bearing composite material according to claim 24, **characterised in that** the sliding layer comprises a sputtered layer.

26. Slide bearing composite material according to claim 25, **characterised in that** the sputtered layer is composed of an aluminium-tin alloy, aluminium-tin-silicon alloy, aluminium-tin-copper alloy, an aluminium-tin-silicon-copper alloy or an aluminium-tin-nickel-manganese alloy.

27. Slide bearing composite material according to claim 26, **characterised in that**, in the alloys, the proportion of tin is 8 - 40% by weight, the proportion of copper is 0.5 - 4.0% by weight, the proportion of silicon is 0.02 - 5.0% by weight, the proportion of nickel is 0.02 - 2.0% by weight and the proportion of manganese is 0.02 - 2.5% by weight.

28. Slide bearing composite material according to claim 25, **characterised in that** the intermediate layer comprises an electroplated layer and the sliding layer comprises a sputtered layer.

29. Slide bearing composite material according to any one of claims 1 to 28, **characterised in that** a running-in layer is provided on the sliding layer.

30. Slide bearing composite material according to claim 29, **characterised in that** the running-in layer is in the form of a tin, lead, copper or indium layer or in the form of a plastics layer.

31. Slide bearing composite material according to any one of claims 1 to 30, **characterised in that** the thickness of the bearing-metal layer is 0.1 - 0.8 mm.

32. Slide bearing composite material according to any one of claims 1 to 31, **characterised in that** the thickness of the intermediate layer is 1 - 12 µm.

33. Slide bearing composite material according to any one of claims 1 to 32, **characterised in that** the thickness of the sliding layer is 4 - 30 µm.

34. Slide bearing composite material according to any one of claims 29 to 33, **characterised in that** the thickness of the running-in layer is from 0.2 to 12 µm.

35. Use of a slide bearing composite material according to claim 1 for slide bearing shells.

36. Method for the manufacture of slide bearing composite material, especially for slide bearing elements, such as slide bearing shells, having the following method steps:
- manufacture of strip material from a copper alloy according to claim 1, and roll-bonding of the strip material, optionally with the use of an intermediate layer, onto a carrier layer of steel for the manufacture of a composite,
- thermo-mechanical treatment having the following steps:
- at least one first annealing of the composite at 550°C - 700°C for 2 to 5 hours,
- at least one first rolling of the composite, a degree of deformation of 20 - 30 % being carried out,
- at least one second annealing at 500°C - 600°C for more than 1 h.

37. Method for the manufacture of slide bearing composite material, especially for slide bearing elements, such as slide bearing shells, having the following method steps:
- application of a copper alloy according to claim 1 to a carrier layer of steel for the manufacture of a composite,
- sintering of the composite, a first annealing being integrated in the sintering process,
- thermo-mechanical treatment having the following steps:
- at least one first rolling of the composite, a degree of deformation of 20 - 30% being carried out,
- at least one second annealing at 500°C - 600°C for more than 1 h.

38. Method for the manufacture of slide bearing composite material, especially for slide bearing elements, such as slide bearing shells, having the following method steps:
- casting a copper alloy according to claim 1 onto a carrier layer of steel for the manufacture of a composite,
- thermo-mechanical treatment having the following steps:
- at least one first annealing of the composite at 550°C - 700°C for 2 to 5 hours,
- at least one first rolling of the composite, a degree of deformation of 20 - 30% being carried out,
- at least one second annealing at 500°C - 600°C for more than 1 h.

39. Method according to any one of claims 36 to 38, **characterised in that** the second annealing is followed by a second rolling with a degree of deformation of max. 30%, with a subsequent third annealing at temperatures >500°C for a period of at least 1 h.

40. Method for the manufacture of slide bearing elements, especially slide bearing shells, **characterised in that**
a composite is manufactured according to any one of claims 36 to 39,
bars are cut from the composite,
those bars are deformed to form slide bearing elements and a sliding layer is applied.

41. Method according to claim 40, **characterised in that** at least one intermediate layer is applied before the application of the sliding layer.

42. Method according to either claim 40 or claim 41, **characterised in that** a running-in layer is applied to the sliding layer.

## Revendications

1. Matériau composite pour paliers lisses avec une couche de support en acier, une couche de métal pour palier en alliage de cuivre, présentant 0,5 - 5 % en poids de nickel, 0,2 - 2,5 % en poids de silicium, ≤ 0,1 % en poids de plomb, au choix 0,05 - 2 % en poids de manganèse, au choix 0,05 - 0,4 % en poids d'au moins un élément de microalliage et de cuivre résiduel et avec une couche de glissement appliquée sur la couche de métal pour palier.

2. Matériau composite pour paliers lisses selon la revendication **1, caractérisé en ce que** l'alliage de cuivre présente 0,05 - 2 % en poids de manganèse.

3. Matériau composite pour paliers lisses selon la revendication 1 ou 2, **caractérisé en ce que** le rapport de poids entre nickel et silicium est comprise entre 2,5 et 5.

4. Matériau composite pour paliers lisses selon une des revendications 1 à 3, **caractérisé en ce que** la couche de métal pour palier présente 0,05 - 0,4 % en poids d'au moins un élément de microalliage.

5. Matériau composite pour paliers lisses selon la revendication 4, **caractérisé en ce que** les éléments de microalliage sont du chrome, du titane, du zirconium, du zinc et/ou du magnésium.

6. Matériau composite pour paliers lisses selon une des revendications 1 à 5, **caractérisé en ce qu'**il existe une liaison par placage par laminage, le cas échéant via une couche intermédiaire, entre la couche de métal pour palier et la couche de support.

7. Matériau composite pour paliers lisses selon une des revendications 1 à 5, **caractérisé en ce que** la couche de métal pour palier est une couche frittée.

8. Matériau composite pour paliers lisses selon une des revendications 1 à 5, **caractérisé en ce que** la couche de métal pour palier est une couche coulée.

9. Matériau composite pour paliers lisses selon une des revendications 1 à 8, **caractérisé en ce que** la couche de glissement est composée d'une couche galvanique.

10. Matériau composite pour paliers lisses selon la revendication 9, **caractérisé en ce que** la couche galvanique est composée d'un alliage plomb-étain-cuivre, d'un alliage étain-cuivre, d'un alliage bismuth-cuivre ou de bismuth.

11. Matériau composite pour paliers lisses selon la revendication 10, **caractérisé en ce que** dans les alliages plomb-étain-cuivre, la part d'étain s'élève à 4 - 20 % en poids et la part de cuivre à 1 -10 % en poids.

12. Matériau composite pour paliers lisses selon la revendication 10, **caractérisé en ce que** dans les alliages bismuth-cuivre, la part de cuivre s'élève à 1 - 20 % en poids et dans les alliages étain-cuivre, la part de cuivre s'élève à 2 - 20 % en poids.

13. Matériau composite pour paliers lisses selon une des revendications 1 à 8, **caractérisé en ce que** la couche de glissement est composée d'une couche appliquée au moyen d'un procédé de revêtement thermique.

14. Matériau composite pour paliers lisses selon une des revendications 1 à 8, **caractérisé en ce que** la couche de glissement est composée d'une couche en matière plastique.

15. Matériau composite pour paliers lisses selon la revendication 14, **caractérisé en ce que** la matrice de la couche de glissement en matière plastique est composée d'une résine résistante aux hautes températures telle que PAI.

16. Matériau composite pour paliers lisses selon la revendication 14 ou 15, **caractérisé en ce que** la couche de glissement en matière plastique présente du MoS₂, du nitrure de bore, du PTFE et/ou du graphite comme matières de charge.

17. Matériau composite pour paliers lisses selon la revendication 16, **caractérisé en ce que** les matières de charge représentent individuellement ou en combinaison entre 5 et 50 % en volume.

18. Matériau composite pour paliers lisses selon une des revendications 1 à 17, **caractérisé en ce qu'**au moins une couche intermédiaire est disposée entre la couche de métal pour palier et la couche de glissement.

19. Matériau composite pour paliers lisses selon la revendication 18, **caractérisé en ce que** la couche intermédiaire est une couche galvanique.

20. Matériau composite pour paliers lisses selon la revendication 18, **caractérisé en ce que** la couche intermédiaire présente du nickel ou de l'argent.

21. Matériau composite pour paliers lisses selon la revendication 19, **caractérisé en ce que** deux couches intermédiaires en nickel et étain-nickel sont prévues.

22. Matériau composite pour paliers lisses selon la revendication 18, **caractérisé en ce que** la couche intermédiaire est une couche appliquée par pulvérisation.

23. Matériau composite pour paliers lisses selon une des revendications 18 à 22, **caractérisé en ce que** la couche intermédiaire est composée d'un alliage de nickel, d'un alliage nickel-chrome, d'un alliage nickel-cuivre, d'un alliage de zinc, de zinc, de chrome, de cuivre, d'un alliage de cuivre, de nickel, d'un alliage chrome-nickel ou de nickel-chrome.

24. Matériau composite pour paliers lisses selon une des revendications 1 à 8 en liaison avec une des revendications 18 à 23, **caractérisé en ce que** la couche de glissement est composée d'une couche appliquée au moyen d'un procédé PVD.

25. Matériau composite pour paliers lisses selon la revendication 24, **caractérisé en ce que** la couche de glissement est composée d'une couche appliquée par pulvérisation.

26. Matériau composite pour paliers lisses selon la revendication 25, **caractérisé en ce que** la couche appliquée par pulvérisation est composée d'un alliage aluminium-étain, d'un alliage aluminium-étain-silicium, d'un alliage aluminium-étain-cuivre, d'un alliage aluminium-étain-silicium-cuivre ou d'un alliage aluminium-étain-nickel-manganèse.

27. Matériau composite pour paliers lisses selon la revendication 26, **caractérisé en ce que** dans les alliages, la part d'étain s'élève à 8 - 40 % en poids, la part de cuivre à 0,5 - 4,0 % en poids, la part de silicium à 0,02 - 5,0 % en poids, la part de nickel à 0,02 - 2,0 % en poids et la part de manganèse à 0,02 - 2,5 % en poids.

28. Matériau composite pour paliers lisses selon la revendication 25, **caractérisé en ce que** la couche intermédiaire est composée d'une couche galvanique et la couche de glissement d'une couche appliquée par pulvérisation.

29. Matériau composite pour paliers lisses selon une des revendications 1 à 28, **caractérisé en ce qu'**une couche de rodage est prévue sur la couche de glissement.

30. Matériau composite pour paliers lisses selon la revendication 29, **caractérisé en ce que** la couche de rodage est réalisée sous la forme d'une couche en étain, plomb, cuivre ou indium ou sous la forme d'une couche en matière plastique.

31. Matériau composite pour paliers lisses selon une des revendications 1 à 30, **caractérisé en ce que** l'épaisseur de la couche de métal pour palier est comprise entre 0,1 et 0,8 mm.

32. Matériau composite pour paliers lisses selon une des revendications 1 à 31, **caractérisé en ce que** l'épaisseur de la couche intermédiaire est comprise entre 1 et 12 µm.

33. Matériau composite pour paliers lisses selon une des revendications 1 à 32, **caractérisé en ce que** l'épaisseur de la couche de glissement est comprise entre 4 et 30 µm.

34. Matériau composite pour paliers lisses selon une des revendications 29 à 33, **caractérisé en ce que** l'épaisseur de la couche de rodage est comprise entre 0,2 et 12 µm.

35. Utilisation d'un matériau composite pour paliers lisses selon la revendication 1 pour des coquilles de paliers lisses.

36. Procédé de fabrication d'un matériau composite pour paliers lisses, en particulier pour des éléments de paliers lisses tels que coquilles de paliers lisses, présentant les étapes suivantes :
- fabrication d'un matériau en bande à partir d'un alliage de cuivre selon la revendication 1, et placage par laminage du matériau en bande, le cas échéant en utilisant une couche intermédiaire, sur une couche de support en acier pour fabriquer un composite,
- traitement thermomécanique présentant les étapes suivantes :
- au moins un premier recuit du composite à 550 °C - 700 °C pendant 2 à 5 heures,
- au moins un premier laminage du composite, un degré de déformation de 20 % - 30 % étant réalisé,
- au moins un deuxième recuit à 500 °C - 600 °C pendant plus d'une heure.

37. Procédé de fabrication d'un matériau composite pour paliers lisses, en particulier pour des éléments de paliers lisses tels que coquilles de paliers lisses, présentant les étapes suivantes :
- application d'un alliage de cuivre selon la revendication 1 sur une couche de support en acier pour fabriquer un composite,
- frittage du composite, un premier recuit étant intégré dans le processus de frittage,
- traitement thermomécanique présentant les étapes suivantes :
- au moins un premier laminage du composite, un degré de déformation de 20 % - 30 % étant réalisé,
- au moins un deuxième recuit à 500 °C - 600 °C pendant plus d'une heure.

38. Procédé de fabrication d'un matériau composite pour paliers lisses, en particulier pour des éléments de paliers lisses tels que coquilles de paliers lisses, présentant les étapes suivantes :
- coulage d'un alliage de cuivre selon la revendication 1 sur une couche de support en acier pour fabriquer un composite,
- traitement thermomécanique présentant les étapes suivantes :
- au moins un premier recuit du composite à 550 °C - 700 °C pendant 2 à 5 heures,
- au moins un premier laminage du composite, un degré de déformation de 20 % - 30 % étant réalisé,
- au moins un deuxième recuit à 500 °C - 600 °C pendant plus d'une heure.

39. Procédé selon une des revendications 36 à 38, **caractérisé en ce qu'**après le deuxième recuit, un deuxième laminage avec un degré de déformation de 30 % max. suivi d'un troisième recuit à des températures > 500 °C pendant au moins une heure est effectué.

40. Procédé de fabrication d'éléments de paliers lisses, en particulier de coquilles de paliers lisses, **caractérisé en ce**
**qu'**un composite selon une des revendications 3b à 39 est fabriqué,
**que** des platines sont séparées du composite,
**que** ces platines sont transformées en éléments de paliers lisses et
**qu'**une couche de glissement est appliquée.

41. Procédé selon la revendication 40, **caractérisé en ce qu'**au moins une couche intermédiaire est appliquée avant l'application de la couche de glissement.

42. Procédé selon une des revendications 40 ou 41, **caractérisé en ce qu'**une couche de rodage est appliquée sur la couche de glissement.
